# EUROPEAN PATENT APPLICATION

(11) **EP 3 958 427 A1**
(43) Date of publication of application: **23.02.2022**
(21) Application number: 20840991.2
(22) Date of filing: 25.05.2020
(51) Int. Cl.: H02J 3/38, H02J 3/32, C25B 1/04

(54) **DC COUPLING OFF-NETWORK HYDROGEN PRODUCTION SYSTEM AND POWER SUPPLY DEVICE FOR CONTROL CABINET THEREOF, AND CONTROL METHOD**

(30) Priority: 12.07.2019 CN 201910631901
(71) Applicant: Sungrow Power Supply Co., Ltd., Hefei, Anhui 230088 (CN)
(72) Inventor: LI, Jiangsong, Hefei, Anhui 230088 (CN); GU, Yu, Hefei, Anhui 230088 (CN); XU, Jun, Hefei, Anhui 230088 (CN)
(74) Representative: Rooney, John-Paul
(86) International application number: PCT/CN2020/092058
(87) International publication number: WO 2021/008235

(57) **Abstract**

A DC coupling off-network hydrogen production system and a power supply device for a control cabinet thereof and a control method. When the output power of a new energy power system (101) meets the power demand of the control cabinet in a hydrogen production groove system (105), the power supply device supplies power to the control cabinet via a uni-directional converter by converting the output electric energy of the new energy power system (101); and when the output power of the new energy power system (101) does not meet the power demand of the control cabinet, the power supply device supplies power to the control cabinet via a bi-directional converter with the power of an energy storage device. The control method eliminates dependency on power grid and avoids the arrangement of cables and box-type substations required by picking power from a high pressure power grid, thereby reducing system cost.

## Description

This application claims the priority to Chinese Patent Application No. 201910631901.3 titled "DC COUPLING OFF-NETWORK HYDROGEN PRODUCTION SYSTEM AND POWER SUPPLY DEVICE FOR CONTROL CABINET THEREOF, AND CONTROL METHOD", filed on July 12, 2019 with the China National Intellectual Property Administration, which is incorporated herein by reference in its entirety.

### FIELD

The present disclosure relates to the technical field of automatic control, and in particular to a direct-current coupling off-grid hydrogen production system, a control cabinet power supply device of a direct-current coupling off-grid hydrogen production system, and a method for controlling a direct-current coupling off-grid hydrogen production system.

### BACKGROUND

In recent years, new energy power generation, such as photovoltaic power generation and wind power generation, has developed rapidly. However, the new energy power generation commonly requires the cooperation of an energy storage system due to disadvantages of unstable power generation and low energy density. Hydrogen, as energy storage medium that is pollution free from production to end-use, cooperates with the new energy power generation to address the above disadvantages. Currently, most commercial new energy power generation hydrogen production systems adopt a grid-connected solution, and have disadvantages of low energy utilization, high system cost and large harmonic components.

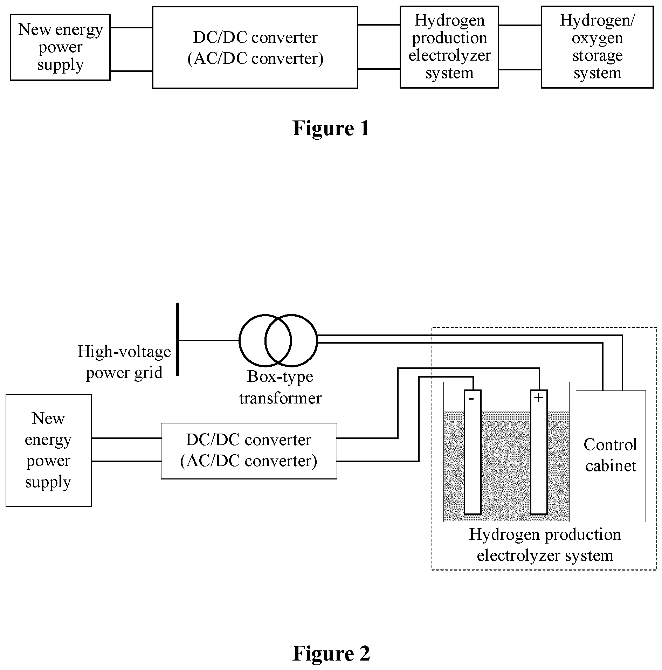

In order to solve disadvantages of an alternating-current hydrogen production system, a solution of a direct-current coupling off-grid hydrogen production system that does not need to be connected to the power grid is provided according to the conventional technology. As shown in Figure 1, a new energy power supply is connected with a hydrogen production electrolyzer system through a DC/DC converter or an AC/DC converter to supply power for hydrogen production by a hydrogen production electrolyzer in the hydrogen production electrolyzer system. The hydrogen production electrolyzer produces hydrogen and oxygen that are respectively stored in a hydrogen storage system and an oxygen storage system. In this way, the energy utilization can be improved and the control is simple.

However, in the direct-current coupling off-grid hydrogen production system according to the conventional technology, the hydrogen production electrolyzer system includes not only the hydrogen production electrolyzer, but also other auxiliary devices, such as a water pump, a circulating pump, and various sensors for detecting an electrolyzer temperature, an electrolyzer voltage and a hydrogen/oxygen liquid level. These electrical devices are arranged in a control cabinet and also require power, and are generally supplied with power by a three-phase alternating-current 380Vac input. In such a case, if the power supply of the conventional grid-connected hydrogen production solution is adopted, as shown in Figure 2, not only power from a high-voltage power grid, but also a box-type transformer for voltage conversion are required. In the case of a large power station, cables for remotely taking power from the high-voltage power grid are further required, significantly increasing the cost of the system.

### SUMMARY

In view of this, a direct-current coupling off-grid hydrogen production system, a control cabinet power supply device of the direct-current coupling off-grid hydrogen production system, and a method for controlling the direct-current coupling off-grid hydrogen production system are provided according to the present disclosure, to solve the problems of a high system cost according to the conventional technology.

In order to achieve the above objective, the following solutions are provided according to the present disclosure.

In an aspect of the present disclosure, a control cabinet power supply device of a direct-current coupling off-grid hydrogen production system is provided, which includes a unidirectional converter, a bidirectional converter and an energy storage device.

The unidirectional converter is connected between a new energy power supply system and a power supply end of a control cabinet of a hydrogen production electrolyzer system in the direct-current coupling off-grid hydrogen production system, and is configured to convert power outputted by the new energy power supply system, to supply power to the control cabinet in a case that of the power outputted by the new energy power supply system meets a power demand of the control cabinet;

The bidirectional converter has a first end connected with the energy storage device, and a second end connected with the new energy power supply system or the power supply end of the control cabinet, and is configured to charge the energy storage device by using the power outputted by the new energy power supply system in a case that remaining power of the energy storage device is insufficient, and supply power from the energy storage device to the control cabinet in a case that the power outputted by the new energy power supply system does not meet the power demand of the control cabinet.

In an embodiment, at least one of the unidirectional converter and the bidirectional converter is connected with a communication unit in the direct-current coupling off-grid hydrogen production system, to receive an energy storage device discharging command in a case that the power outputted by the new energy power supply system does not meet the power demand of the control cabinet.

In an embodiment, the control cabinet power supply device of a direct-current coupling off-grid hydrogen production system further includes a controller connected with the unidirectional converter and the bidirectional converter. The controller is configured to receive an energy storage device discharging command in a case that the power outputted by the new energy power supply system does not meet the power demand of the control cabinet, and control the bidirectional converter, or control the unidirectional converter and the bidirectional converter in response to the energy storage device discharging command to supply the power from the energy storage device to the control cabinet.

In an embodiment, the unidirectional converter is one of a DC/AC converter, a DC/DC converter, an AC/AC converter and an AC/DC converter; and
the bidirectional converter is one of a bidirectional DC/DC converter and a bidirectional DC/AC converter.

In an embodiment, the bidirectional converter has one of an isolated boost topology, a non-isolated boost topology, an isolated buck topology, a non-isolated buck topology, an isolated boost-buck topology, or a non-isolated boost-buck topology.

In another aspect of the present disclosure, a direct-current coupling off-grid hydrogen production system is provided, which includes a new energy power supply system, a first converter system, a second converter system, a communication unit, a hydrogen storage system, an oxygen storage system and at least one hydrogen production electrolyzer system.

The new energy power supply system is connected with a power supply end of a hydrogen production electrolyzer in the hydrogen production electrolyzer system through the first converter system.

One end of the communication unit is connected with a communication end of a control cabinet, and another end of the communication unit is connected with a communication end of the first converter system and a communication end of the second converter system.

Hydrogen and oxygen produced by the hydrogen production electrolyzer are respectively outputted to the hydrogen storage system and the oxygen storage system through respective pipelines; and

The second converter system is the control cabinet power supply device of the direct-current coupling off-grid hydrogen production system according to any one of the above embodiments.

In an embodiment, the first converter system includes at least one converter.

An input end of the converter is connected with at least one power generation branch in the new energy power supply system.

An output end of the converter is configured to supply power to the hydrogen production electrolyzer in the hydrogen production electrolyzer system.

A normal operation state of the converter is a state in which the converter operates in a maximum power point tracking (MPPT) control mode.

In an embodiment, the power generation branch includes one photovoltaic string, or multiple photovoltaic strings and a confluence box for receiving power from the multiple photovoltaic strings.

The converter is one of a DC/DC converter and a DC/AC converter.

In an embodiment, the power generation branch includes a wind turbine and a doubly fed induction generator connected with the wind turbine, or the power generation branch includes a wind turbine and a permanent magnet synchronous generator connected with the wind turbine.

The converter is an AC/DC converter or an AC/AC converter.

In an embodiment, in a case that the first converter system includes multiple converters, output ends of the multiple converters are connected in series and/or in parallel with each other to supply power to the hydrogen production electrolyzer.

In an embodiment, in a case that the number of the hydrogen production electrolyzer system is one, the communication unit is independent of the control cabinet, or the communication unit is integrated into the control cabinet; and
in a case that the number of the hydrogen production electrolyzer system is more than one, the communication unit is independent of the control cabinet.

In an embodiment, a distance between the hydrogen production electrolyzer and the first converter system is less than a predetermined distance.

In a third aspect of the present disclosure, a method for controlling a direct-current coupling off-grid hydrogen production system is provided. The method is applied to the direct-current coupling off-grid hydrogen production system according to any one of the above embodiments. The method includes:
controlling, by the second converter system in a case that a starting condition is met, the unidirectional converter in the second converter system to enter a normal operation state, and determining, by the second converter system, whether the remaining power of the energy storage device in the second converter system is less than an upper limit;
controlling, by the second converter system based on a determination that the remaining power of the energy storage device is less than the upper limit, the bidirectional converter in the second converter system, or the unidirectional converter and the bidirectional converter to charge the energy storage device by using the power outputted by the new energy power supply system in the direct-current coupling off-grid hydrogen production system, until the remaining power of the energy storage device is greater than or equal to the upper limit;
transmitting, by the control cabinet of the hydrogen production electrolyzer system in the direct-current coupling off-grid hydrogen production system, a state of the hydrogen production electrolyzer to the first converter system through the communication unit;
determining, by the first converter system, whether the state of the hydrogen production electrolyzer is normal;
the first converter system entering a normal operation state in a case that that the state of the hydrogen production electrolyzer is normal;
determining, by the first converter system, whether the power outputted by the new energy power supply system meets the power demand of the control cabinet;
transmitting, by the first converter system in a case that the power outputted by the new energy power supply system does not meet the power demand of the control cabinet, an energy storage device discharging command to the second converter system through the communication unit; and
controlling, by the second converter system in response to the energy storage device discharging command, the bidirectional converter, or the unidirectional converter and the bidirectional converter to supply the power from the energy storage device to the control cabinet.

In an embodiment, in a case that the first converter system comprises a plurality of converters that have built-in controllers and that communicate with each other in a master-slave control manner, operations performed by the first converter system are performed by one of the converters that functions as a master in the first converter system;
in a case that the first converter system comprises a general controller and a plurality of converters, operations performed by the first converter system are performed by the general controller; and
in a case that the first converter system comprises a plurality of converters having built-in controllers and each of the plurality of converters communicates with the communication unit, operations performed by the first converter system are performed by the plurality of converters in the first converter system.

In an embodiment, in a case that each of the unidirectional converter and the bidirectional converter is provided with a built-in controller and the controller in the unidirectional converter communicates with the controller in the bidirectional converter in a master-slave control manner, operations performed by the second converter system are performed by one of the controller in the unidirectional converter and the controller in the bidirectional converter that functions as a master;
in a case that the unidirectional converter and the bidirectional converter are controlled by a general controller in the second converter system, operations performed by the second converter system are performed by the general controller; and
in a case that each of the unidirectional converter and the bidirectional converter is provided with a built-in controller that communicates with the communication unit, operations performed by the second converter system are performed by the built-in controller in each of the unidirectional converter and the bidirectional converter.

In the control cabinet power supply device of a direct-current coupling off-grid hydrogen production system according to the present disclosure, in a case that the power outputted by the new energy power supply system meets the power demand of the control cabinet, the unidirectional converter converts the power outputted by the new energy power supply system to supply the control cabinet; and in a case that the power outputted the new energy power supply system does not meet the power demand of the control cabinet, the bidirectional converter supplies power from the energy storage device to the control cabinet. In this way, reliance on the power grid in the conventional technology can be eliminated, and the cables and the box-type transformer for taking power from the high-voltage power grid in the conventional technology can be avoided, thereby reducing the system cost.

### BRIEF DESCRIPTION OF THE DRAWINGS

Figure 1 is a schematic structural diagram of a direct-current coupling off-grid hydrogen production system according to the conventional technology;
Figure 2 is a schematic structural diagram of a direct-current coupling off-grid hydrogen production system according to the conventional technology;
Figures 3 and 4 are schematic diagrams showing two structures of a direct-current coupling off-grid hydrogen production system according to embodiments of the present disclosure;
Figures 5a and 5b are schematic diagrams showing two structures of a direct-current coupling off-grid hydrogen production system according to embodiments of the present disclosure;
Figure 6 is a schematic structural diagram of a direct-current coupling off-grid hydrogen production system according to another embodiment of the present disclosure; and
Figure 7 is a flow chart of a method for controlling a direct-current coupling off-grid hydrogen production system according to an embodiment of the present disclosure.

### DETAILED DESCRIPTION

The technical solutions of the embodiments of the present disclosure are described clearly and completely in conjunction with the drawings in the embodiments of the present disclosure hereinafter. It is apparent that the described embodiments are only some rather than all embodiments of the present disclosure. All other embodiments obtained by those skilled in the art based on the embodiments of the present disclosure without any creative work fall within the scope of the present disclosure.

A direct-current coupling off-grid hydrogen production system is provided according to the present disclosure, to solve the problem of high system cost in the conventional technology.

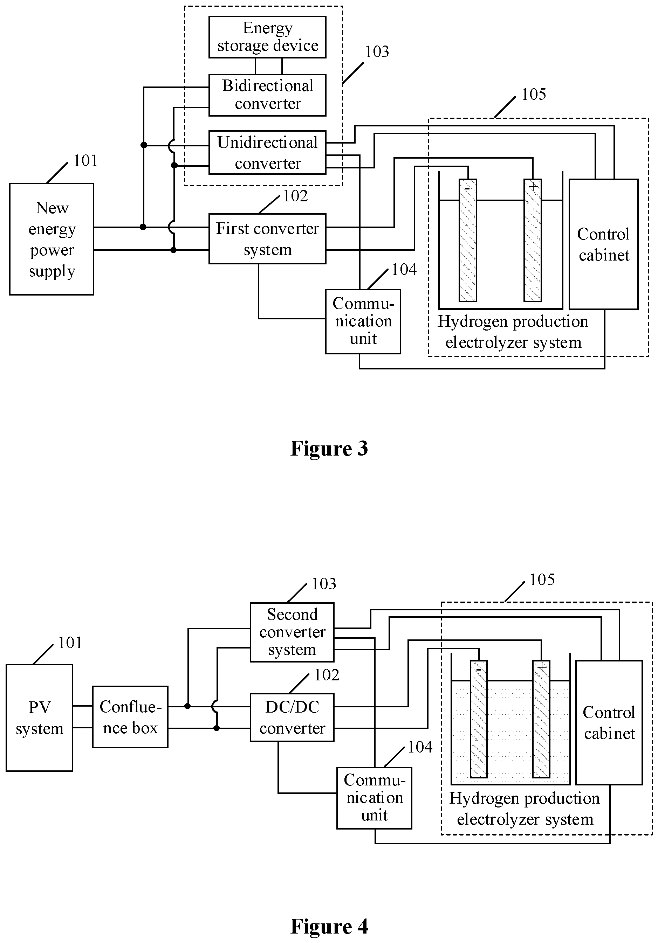

Referring to figure 3, a control cabinet power supply device (as indicated by 103 in Figure 3) for the direct-current coupling off-grid hydrogen production system includes a unidirectional converter, a bidirectional converter and an energy storage device.

The unidirectional converter is connected between a new energy power supply system 101 and a power supply end of a control cabinet in a hydrogen production electrolyzer system 105 in the direct-current coupling grid-disconnected hydrogen production system.

The bidirectional converter may be arranged at an input end of the unidirectional converter or arranged at an output end of the unidirectional converter, that is, a first end of the bidirectional converter is connected with the energy storage device, and a second end of the bidirectional converter may be connected with the new energy power supply system 101. Alternatively, the second end of the bidirectional converter may further be connected with the power supply end of the control cabinet.

Assuming that the new energy power supply system 101 is a PV system, in a case that the control cabinet requires alternating-current power, the unidirectional converter is a DC/AC converter; and in a case that the control cabinet requires direct-current power, the unidirectional converter is a DC/DC converter. If the bidirectional converter is arranged at the input end of the unidirectional converter, the bidirectional converter is a bidirectional DC/DC converter. If the bidirectional converter is arranged at the output end of the unidirectional converter, the bidirectional converter may be a bidirectional DC/AC converter or a bidirectional DC/DC converter, depending on a power demand of the control cabinet. Assuming that the new energy power supply system 101 is a wind power generation system, the unidirectional converter may be an AC/AC converter or an AC/DC converter, depending on the power demand of the control cabinet. If the bidirectional converter is arranged at the input end of the unidirectional converter, the bidirectional converter is a bidirectional AC/DC converter. If the bidirectional converter is arranged at the output end of the unidirectional converter, the bidirectional converter may be a bidirectional DC/AC converter or a bidirectional DC/DC converter, depending on the power demand of the control cabinet.

In an embodiment, the bidirectional converter has an isolated or non-isolated boost topology, an isolated or non-isolated buck topology, or an isolated or non-isolated boost-buck topology; and the unidirectional converter has an isolated topology, a non-isolated topology, a two-level topology, a multi-level topology, a full-bridge topology or a half-bridge topology. The energy storage device may be a lithium battery or other types of batteries, which is not limited herein and depends on the application environment. All these alternatives fall within the scope of the present disclosure.

The unidirectional converter is configured to convert power outputted by the new energy power supply system 101, and supply the power to the control cabinet, in a case that the power outputted by the new energy power supply system 101 meets the power demand of the control cabinet.

The bidirectional converter is configured to charge the energy storage device by using the power outputted by the new energy power supply system 101 in a case that remaining power of the energy storage device is insufficient. For example, when the direct-current coupling off-grid hydrogen production system is started in the morning, it is determined whether to charge the energy storage device according to the remaining power of the energy storage device while the unidirectional converter operates. If the remaining power is less than an upper limit, the bidirectional converter starts to operate to charge the energy storage device. When the remaining power reaches the upper limit, the bidirectional converter stops charging the energy storage device. In a case that the remaining power is greater than or equal to the upper limit, the bidirectional converter does not operate and the energy storage device is not charged.

In addition, the bidirectional converter is further configured to supply power from the energy storage device to the control cabinet in a case that the power outputted by the new energy power supply system 101 fluctuate to such an extent that the power demand of the control cabinet cannot be met, for example, when the power outputted by of the new energy power supply system 101 is lower than a threshold or equal to zero. In this way, the reliance on the power grid in the conventional technology can be eliminated, and the cables and the box-type transformer for taking power from the high-voltage power grid in the conventional technology can be avoided, thereby reducing the system cost.

It should be noted that, as shown in Figure 3, the bidirectional converter is arranged at the input end of the unidirectional converter. In a case that the energy storage device is charged, the bidirectional converter directly takes the power from the new energy power supply system 101 and converts the power. In a case that the energy storage device is discharged, the bidirectional converter and the unidirectional converter successively perform power conversion, to supply power to the control cabinet. If the bidirectional converter is arranged at the output end of the unidirectional converter (not shown), in the case that the energy storage device is charged, the unidirectional converter and the bidirectional converter successively converts the power from the new energy power supply system 101 to charge the energy storage device. In the case that the energy storage device is discharged, only the bidirectional converter performs power conversion, to supply power to the control cabinet.

In practices, the control cabinet power supply device is further connected with a communication unit 104 of the direct-current coupling off-grid hydrogen production system, to communicate with the communication unit 104. If each of the unidirectional converter and the bidirectional converter is provided with a built-in controller, and the controller in the unidirectional converter communicates with the controller in the bidirectional converter in a master-slave control manner, the communication unit 104 communicates with one of the controller in the unidirectional converter and the controller in the bidirectional converter that functions as a master. If both the unidirectional converter and the bidirectional converter are controlled by a general controller in the control cabinet power supply device in a centralized manner, the communication unit 104 communicates with the general controller. If each of the unidirectional converter and the bidirectional converter is provided with a built-in controller that is not distinguished as a master and a slave, both controllers communicate with the communication unit 104. Therefore, when the power outputted by the new energy power supply system 101 does not meet the power demand of the control cabinet, the communication unit 104 may further transmit an energy storage device discharging command to inform the master controller in the unidirectional converter or the bidirectional converter, both the unidirectional converter and the bidirectional converter, or the controller for controlling the unidirectional converter and the bidirectional converter, that the energy storage device is to be discharged, to cause at least the bidirectional converter to operate, so that the energy storage device is discharged, to meet the power demand of the control cabinet.

The communication process depends on the application environment, which is not limited herein. These variations fall within the scope of the present disclosure.

A direct-current coupling off-grid hydrogen production system is further provided according to another embodiment of the present disclosure. The direct-current coupling off-grid hydrogen production system includes a new energy power supply system 101, a first converter system 102, a second converter system 103, a communication unit 104, a hydrogen storage system, an oxygen storage system and at least one hydrogen production electrolyzer system 105. The new energy power supply system 101 may be a PV system or a wind power generation system, which is not limited herein. The hydrogen production electrolyzer system 105 includes a hydrogen production electrolyzer and a control cabinet. The hydrogen production electrolyzer may be an alkaline electrolyzer, a PEM electrolyzer, or a solid oxide electrolyzer. The hydrogen production electrolyzer produces hydrogen and oxygen that are respectively output to the hydrogen storage system and the oxygen storage system through respective pipelines. The control cabinet is provided with a water pump, a circulating pump, and various sensors for detecting an electrolyzer temperature, an electrolyzer voltage and a hydrogen/oxygen liquid level, to transmit a state of the hydrogen production electrolyzer. The state of the hydrogen production electrolyzer includes detection information of the electrolyzer temperature, the electrolyzer voltage and the hydrogen/oxygen liquid level, and is used for determining whether the state of the hydrogen production electrolyzer is abnormal.

The new energy power supply system 101 is connected with an input end of the first converter system 102 and an input end of the second converter system 103. An output end of the first converter system 102 is connected with a power supply end of the hydrogen production electrolyzer in the hydrogen production electrolyzer system 105. An output end of the second converter system 103 is connected with the power supply end of the control cabinet in the hydrogen production electrolyzer system 105. In this way, the new energy power supply system 101 supplies power to the hydrogen production electrolyzer in the hydrogen production electrolyzer system 105 through the first converter system 102, and further supplies power to the control cabinet in the hydrogen production electrolyzer system 105 through the second converter system 103. The second converter system 103 is implemented by the control cabinet power supply device according to the embodiment described above. For the structure and principle of the second converter system 103, reference is made to the above embodiment, which is not repeated herein.

In the direct-current coupling off-grid hydrogen production system according to the embodiment, based on the direct-current coupling solution, the power demand of the control cabinet of the hydrogen production electrolyzer system is met by using power from photovoltaic power generation or wind power generation. Therefore, reliance on the power grid in the conventional technology can be eliminated, and the cables and the box-type transformer for taking electricity from the high-voltage power grid in the conventional technology can be avoided, thereby reducing the system cost and achieving fully off-grid and green hydrogen production.

In practices, when the direct-current coupling off-grid hydrogen production system is started, the second converter system 103 is first controlled to enter a normal operation state to supply power to the control cabinet in the hydrogen production electrolyzer system 105, so that the control cabinet performs various preparations, such as detecting an electrolyzer temperature, an electrolyzer voltage, a hydrogen/oxygen liquid level of the hydrogen production electrolyzer, and generating and outputting the state of the hydrogen production electrolyzer.

In addition, in the direct-current coupling off-grid hydrogen production system, the communication unit 104 is connected with a communication end of the control cabinet, a communication end of the first converter system 102 and a communication end of the second converter system 103, such that the control cabinet, the first converter system 102 and the second converter system 103 communicate with each other, the second converter system 103 can receive the energy storage device discharging command, and the first converter system 102 can receive the state of the hydrogen production electrolyzer from the control cabinet, and enters a normal operation state if the state of the hydrogen production electrolyzer is normal.

The communication unit 104 may be independent of the hydrogen production electrolyzer system 105 (as shown in Figures 3 and 4). Alternatively, the communication unit 104 may further be integrated into the control cabinet (not shown) in a case that the number of the hydrogen production electrolyzer system 105 is one.

Therefore, the direct-current coupling off-grid hydrogen production system according to the embodiment has a simple structure, low system cost and achieves green hydrogen production. In addition, the direct-current coupling off-grid hydrogen production system according to the embodiment has simple starting logic, and therefore is easy to operate, which is beneficial for popularization.

A direct-current coupling off-grid hydrogen production system is further provided according to another embodiment of the present disclosure. Based on the above embodiment shown in Figure 3, preferably, as shown in Figure 4, the new energy power supply system 101 is a PV system.

The PV system includes at least one photovoltaic string. The photovoltaic string may be formed by one or more photovoltaic module of various power-levels, forming a PV system providing 1000V, 1500V or a higher voltage, which is not limited herein, and depends on the application environment. These variations fall within the scope of the present disclosure.

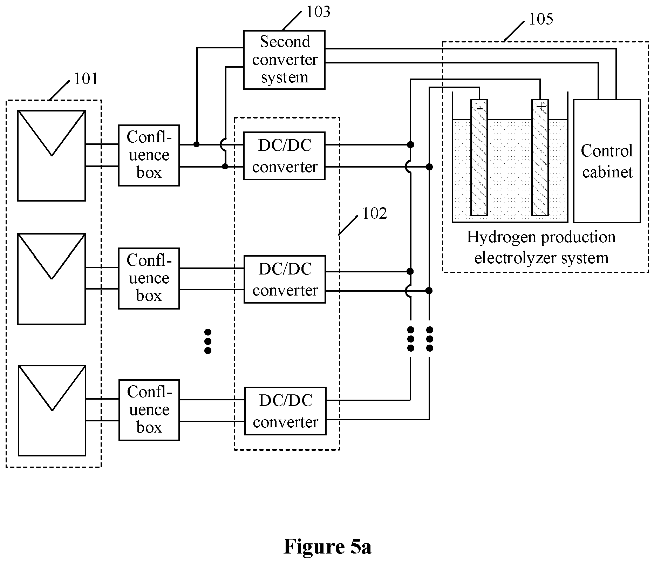

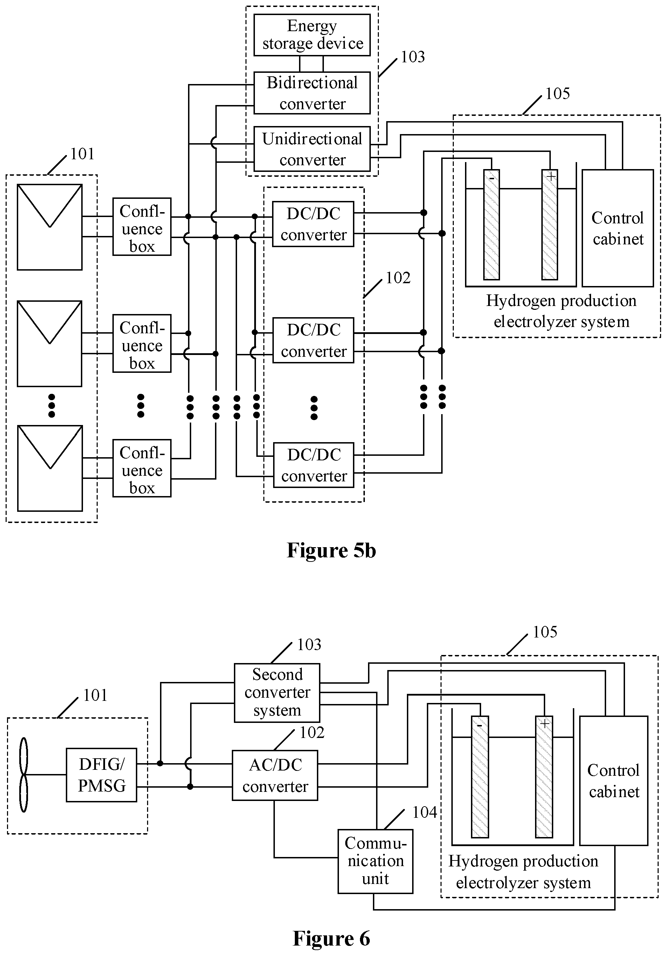

Energy required for hydrogen production by the hydrogen production electrolyzer system is acquired from the PV system at a previous stage and after conversion by a DC/DC converter. That is, the first converter system 102 includes at least one DC/DC converter (for example, as shown in Figure 4, the first converter system 102 includes one DC/DC converter). If the DC/DC converter has a low power level, an output of the photovoltaic string may be directly connected with an input end of the DC/DC converter. That is, the input end of the DC/DC converter is connected with a photovoltaic string corresponding to the DC/DC converter, and power is supplied to the hydrogen production electrolyzer in the hydrogen production electrolyzer system 105 through an output end of the DC/DC converter. In a case that the new energy power supply system 101 includes multiple photovoltaic strings, as shown in Figure 4, the direct-current coupling off-grid hydrogen production system further includes at least one confluence box. In this case, the input end of each of the DC/DC converters may be connected with at least two corresponding photovoltaic strings through a different confluence box (as shown in Figure 5a). Alternatively, the input ends of the DC/DC converters are connected in parallel and are connected to a bus to which output ends of multiple confluence boxes that are connected in parallel are connected. Each of the multiple confluence boxes may be connected with at least two photovoltaic strings (as shown in Figure 5b). The number of DC inputs of the confluence box may be 8, 16, 20 or the like, which is not limited herein.

The DC/DC converter may have an isolated topology, a non-isolated topology, a boost topology, which is not limited herein and depends on the application environment. These alternatives fall within the scope of the present disclosure.

Moreover, a normal operation state of the DC/DC converter is a state in which the DC/DC converter operates in a maximum power point tracking (MPPT) control mode. In a case that the system has multiple DC/DC converters, each of the multiple DC/DC converters independently performs MPPT control to maximize photovoltaic energy utilization for hydrogen production.

In addition, in a case that the first converter system 102 includes multiple DC/DC converters, output ends of the multiple DC/DC converters may further be connected in series and/or in parallel with each other to supply power to the hydrogen production electrolyzer. For example, in a distributed off-grid hydrogen production system shown in Figure 5a, an input end of each of the DC/DC converters is connected with a photovoltaic string corresponding to the DC/DC converter. The confluence box in Figure 5a may be provided according to the application environment and is optional. The output ends of the multiple DC/DC converters are connected in parallel with each other to form a branch, and the branch is connected with the hydrogen production electrolyzer in the hydrogen production electrolyzer system. In this case, the input end of the second converter system 103 is connected with one photovoltaic string or an output end of one confluence box. The input end of the second converter system 103 may be connected with a photovoltaic string nearest to the hydrogen production electrolyzer system according to the actual situation, which is not limited herein. As shown in Figure 5b, the input end of each of the DC/DC converters is connected to a bus to which output ends of multiple confluence boxes that are connected in parallel with each other are connected. The confluence box in Figure 5b may be provided according to the application environment and is optional. The output ends of the multiple DC/DC converters are connected in parallel with each other to form a branch, and the branch is connected with the hydrogen production electrolyzer in the hydrogen production electrolyzer system. In this case, the input end of the second converter system 103 is connected to the bus.

It should be noted that power for the electrical devices in the control cabinet of the hydrogen production electrolyzer system is acquired from the PV system at a previous stage and after conversion by the second converter system 103. In a case that the control cabinet requires direct-current power, the second converter system 103 includes at least one DC/DC converter. In a case that the control cabinet requires alternating-current power, the second converter system 103 includes at least one DC/AC converter. For example, the second converter system 103 shown in Figure 4 includes one DC/AC converter. Moreover, the converter in the second converter system 103 may have an isolated topology, a non-isolated topology, a two-level topology, a multi-level topology, a full-bridge topology or a half-bridge topology, which is not limited herein and depends on the application environment. These alternatives fall within the scope of the present disclosure.

It can be seen from the above embodiment that the direct-current coupling photovoltaic off-grid hydrogen production system according to the embodiment has strong universality and may be applied to distributed and centralized off-grid hydrogen production systems, and may be applied to various scenarios such as roofs of residential buildings, roofs of industrial and commercial buildings, hills, deserts, and fishery-photovoltaic hybrid.

A direct-current coupling off-grid hydrogen production system is further provided according to another embodiment of the present disclosure. Based on the embodiment shown in Figure 3, in an embodiment, as shown in Figure 6, the new energy power supply 101 includes at least one wind energy branch.

The at least one wind energy branch includes a wind turbine and a doubly fed induction generator (DFIG), or includes a wind turbine and a permanent magnet synchronous generator (PMSG). An output end of the wind turbine is connected with an input end of the DFIG or the PMSG. An output end of the DFIG or the PMSG is connected with the input end of the first converter system 102 and the input end of the second converter system 103.

In an embodiment, the first converter system 102 includes at least one AC/DC converter (for example, as shown in Figure 6, the first converter system 102 includes one AC/DC converter). The AC/DC converter may have an isolated topology, a non-isolated topology, a boost topology, a buck topology or a boost-buck topology, which is not limited herein and depends on the application environment. These alternatives fall within the scope of the present disclosure. An input end of the AC/DC converter is connected with the output end of the DFIG or the PMSG. An output end of the AC/DC converter supplies power to the hydrogen production electrolyzer in the hydrogen production electrolyzer system 105.

In an embodiment, in a case that the first converter system 102 includes multiple AC/DC converters, output ends of the multiple AC/DC converters are connected in series and/or parallel with each other to supply power to the hydrogen production electrolyzer.

In this case, the second converter system 103 may include at least one AC/AC converter or at least one AC/DC converter according to the power demand of the control cabinet at a subsequent stage. For example, the second converter system 103 shown in Figure 6 includes one AC/AC converter. In addition, a converter in the second converter system 103 may have an isolated topology, a non-isolated topology, a two-level topology, a three-level topology, a full-bridge topology or a half-bridge topology. The topology of the converter is not limited herein, depends on the application environment. These alternatives fall within the scope of the present disclosure.

Moreover, a normal operation state of the AC/DC converter is a state in which the AC/DC converter operates in the MPPT control mode. The AC/DC converter performs MPPT control based on a torque signal fed back by a wind turbine system, and converts the wind energy into power required by the control cabinet in the hydrogen production electrolyzer system. The remaining parts are the same as that described in the direct-current coupling photovoltaic off-grid hydrogen production system, which are not repeated herein.

The communication unit is not shown in Figures 5a to 6. For the connection and arrangement of the communication unit, reference is made to the embodiments as shown in Figures 3 and 4.

In an embodiment, based on the above embodiment and Figures 3 to 6, in the direct-current coupling off-grid hydrogen production system, a distance between the hydrogen production electrolyzer and the first converter system 102 is less than a predetermined distance.

The predetermined distance may be determined according to the application environment. The predetermined distance that is determined such that the hydrogen production electrolyzer can be arranged on a new energy side and close to the first converter system 102, thereby reducing a length of an input cable of the hydrogen production electrolyzer to a greatest extent, falls within the scope of the present disclosure.

The direct-current coupling photovoltaic off-grid hydrogen production system produces hydrogen in a decentralized manner and stores hydrogen in a centralized manner, which can further reduce the cable loss and cost. In addition, the system has a simple structure, and is easy to implement, which is beneficial to application.

A method for controlling a direct-current coupling off-grid hydrogen production system is provided according to another embodiment of the present disclosure. The method is applied to the direct-current coupling off-grid hydrogen production system according to any one of the embodiments as described above. For a structure and component functions of the direct-current coupling off-grid hydrogen production system, reference is made to the embodiments as described above, which is not repeated herein.

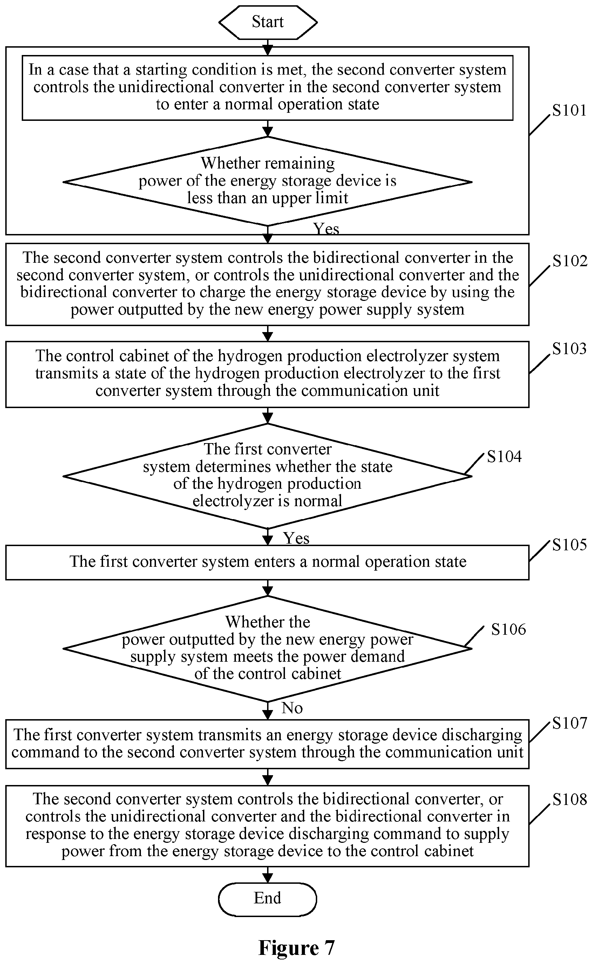

As shown in Figure 7, the method includes the following steps S101 to S108.

In step S101, when a starting condition is met, a second converter system controls a unidirectional converter arranged in the second converter system to enter a normal operation state, and determines whether a remaining power of an energy storage device arranged in the second converter system is less than an upper limit.

The meeting the starting condition may include: a starting time instant is reached, it is detected that a light intensity is greater than a threshold, or reception of a starting command. In addition, the detection of the time instant or the light intensity and the reception of the starting command are implemented by a processor. The processor may be a controller arranged in the second converter system, such as a general controller for centralized control, or a built-in controller in a converter in the second converter system. Alternatively, the processor may be a controller arranged outside the second converter system, such as a system controller or a controller arranged in the first converter system. In a case that the second converter system is provided with a controller and the processor is a controller arranged outside the second converter system, the controller arranged in the second converter system further communicates with the controller arranged outside the second converter system through a communication unit, which is not limited herein and depends on the application environment. These alternatives fall within the scope of the present disclosure.

After the second converter system controls the unidirectional converter in the second converter system to enter the normal operation state, the unidirectional converter may supply power to the control cabinet of the hydrogen production electrolyzer system in the direct-current coupling off-grid hydrogen production system.

If it is determined that the remaining power of the energy storage device is less than the upper limit, step S 102 is performed until the remaining power of the energy storage device is greater than or equal to the upper limit. If it is determined that the remaining power of the energy storage device is greater than or equal to the upper limit, the energy storage device is not charged.

In step S102, the second converter system controls a bidirectional converter arranged in the second converter system, or controls the unidirectional converter and the bidirectional converter to charge the energy storage device by using power outputted by a new energy power supply system in the direct-current coupling off-grid hydrogen production system.

In step S103, the control cabinet of the hydrogen production electrolyzer system in the direct-current coupling off-grid hydrogen production system is controlled to transmit a state of the hydrogen production electrolyzer to the first converter system through the communication unit.

The state of the hydrogen production electrolyzer includes detection information of an electrolyzer voltage, an electrolyzer temperature and a hydrogen/oxygen liquid level of the hydrogen production electrolyzer, which reflects whether the state of the hydrogen production electrolyzer is abnormal.

In step S104, the first converter system determines whether the state of the hydrogen production electrolyzer is normal.

If the state of the hydrogen production electrolyzer is normal, step S105 is performed.

In step S105, the first converter system enters a normal operation state.

In step S106, the first converter system determines whether the power outputted by the new energy power supply system meet a power demand of the control cabinet.

If the power outputted by the new energy power supply system does not meet the power demand of the control cabinet, step S 107 is performed.

In step S107, the first converter system transmits an energy storage device discharging command to the second converter system through the communication unit.

In step S108, the second converter system controls the bidirectional converter, or controls the unidirectional converter and the bidirectional converter in response to the energy storage device discharging command to supply power from the energy storage device to the control cabinet.

Before hydrogen production, the hydrogen production electrolyzer system is required to perform self-detection on hydrogen production electrolyzer devices, such as detection of an electrolyzer voltage, an electrolyzer temperature, and a hydrogen/oxygen liquid level, under coordination and control by the control cabinet. Therefore, before hydrogen production, the control cabinet operates first, that is, it is required to meet the power demand of the control cabinet. In this case, the second converter system operates first to convert energy from the new energy power supply system into power required by electrical devices in the control cabinet, and then the hydrogen production electrolyzer system starts to perform self-detection to monitor an initial state, and feeds back a state of the hydrogen production electrolyzer to the first converter system through the communication unit. If the state of the hydrogen production electrolyzer is normal, the converter in the first converter system starts to perform MPPT control, and convert the energy from the new energy power supply system into energy required for hydrogen production, so as to maximize off-grid hydrogen production. Control of the first converter system is decoupled from control of the second converter system, and the control is simple and easy to be implemented.

It should be noted that, it may be first determined whether the energy storage device is required to be charged every time when the direct-current coupling off-grid hydrogen production system is started, to ensure that the energy storage device has sufficient power, so as to supply the control cabinet when power from the new energy power supply system is insufficient. In this case, an order of steps S102 and S103 is not limited, and steps S102 and S103 may alternatively be performed simultaneously. In addition, the determination of whether the energy storage device is required to be charged is not limited to be performed at a starting time instant, and may be performed depending on the application environment. These alternatives fall within the scope of the present disclosure.

In addition, whether the converter in the first converter system is the DC/DC converter or the AC/DC converter, as long as the first converter system includes multiple converters and the multiple converters communicate with each other in a master-slave control manner, operations performed by the first converter system are performed by one of the converters functioning as a master in the first converter system. In this case, step S104 includes: determining, by one of the converters functioning as the master in the first converter system, whether the state of the hydrogen production electrolyzer is normal. In addition, the controlling the first converter system to enter the normal operation state in step S105 includes: the converter functioning as the master in the first converter system controlling itself and other converters to enter the normal operation state.

In a case that the first converter system includes multiple converters that are not distinguished as a master and a slave, and all communicate with the communication unit, operations performed by the first converter system are performed by the multiple converters in the first converter system. In this case, step S104 includes: determining, by each of the multiple converters in the first converter system, whether the state of the hydrogen production electrolyzer is normal. In addition, the controlling the first converter system to enter the normal operation state in step S105 includes: each of the multiple converters in the first converter system controlling itself to enter the normal operation state.

In a case that the first converter system is controlled in a centralized mode, that is, a general controller and multiple converters having no built-in controller are provided, operations performed by the first converter system are performed by the general controller. In this case, step S104 includes: determining, by the general controller, whether the state of the hydrogen production electrolyzer is normal. In addition, the controlling the first converter system to enter the normal operation state in step S105 includes: controlling, by the general controller, all the multiple converters to enter the normal operation state.

The communication and control in the first converter system may be determined according to the application environment, and is not limited herein. These alternatives fall within the scope of the present disclosure.

For the second converter system, in a case that each of the unidirectional converter and the bidirectional converter is provided with a built-in controller, and the controller in the unidirectional converter communicates with the controller in the bidirectional converter in a master-slave control manner, operations performed by the second converter system are performed by one of the controller in the unidirectional converter and the controller in the bidirectional converter that functions as a master. In a case that both the unidirectional converter and the bidirectional converter are controlled by a general controller in the second converter system, operations performed by the second converter system are performed by the general controller. In a case that each of the unidirectional converter and the bidirectional converter is provided with a built-in controller that communicates with the communication unit, operations performed by the second converter system are performed by the built-in controller in each of the unidirectional converter and the bidirectional converter. The performing process is not repeated, and one may refer to the first embodiment for the detailed description.

The embodiments in this specification are described in a progressive way, each of which emphasizes the differences from others, and the same or similar parts among the embodiments can be referred to each other. Since the device disclosed in the embodiments corresponds to the method therein, the description thereof is relatively simple, and for relevant matters references may be made to the description of the method.

The foregoing embodiments are only preferred embodiments of the present disclosure and are not meant to limit the present disclosure. The preferred embodiments according to the present disclosure are disclosed above, and are not intended to limit the present disclosure. Those skilled in the art may make, based on the disclosed method and technical content, some variations and improvements on the technical solutions of the present disclosure, or make some equivalent variations on the embodiments without departing from the scope of the technical solutions. All simple modifications, equivalent variations and improvements made based on the technical essence fall in the scope of the technical solutions of the present disclosure.

## Claims

1. A control cabinet power supply device of a direct-current coupling off-grid hydrogen production system, comprising a unidirectional converter, a bidirectional converter and an energy storage device, wherein
the unidirectional converter is connected between a new energy power supply system and a power supply end of a control cabinet of a hydrogen production electrolyzer system in the direct-current coupling off-grid hydrogen production system, and is configured to convert power outputted by the new energy power supply system, to supply power to the control cabinet in a case that of the power outputted by the new energy power supply system meets a power demand of the control cabinet;
the bidirectional converter has a first end connected with the energy storage device, and a second end connected with the new energy power supply system or the power supply end of the control cabinet, and is configured to charge the energy storage device by using the power outputted by the new energy power supply system in a case that remaining power of the energy storage device is insufficient, and supply power from the energy storage device to the control cabinet in a case that the power outputted by the new energy power supply system does not meet the power demand of the control cabinet.

2. The control cabinet power supply device of a direct-current coupling off-grid hydrogen production system according to claim 1, wherein
at least one of the unidirectional converter and the bidirectional converter is connected with a communication unit in the direct-current coupling off-grid hydrogen production system, to receive an energy storage device discharging command in a case that the power outputted by the new energy power supply system does not meet the power demand of the control cabinet.

3. The control cabinet power supply device of a direct-current coupling off-grid hydrogen production system according to claim 1, further comprising a controller connected with the unidirectional converter and the bidirectional converter, wherein
the controller is configured to:
receive an energy storage device discharging command in a case that the power outputted by the new energy power supply system does not meet the power demand of the control cabinet, and
control the bidirectional converter, or control the unidirectional converter and the bidirectional converter, in response to the energy storage device discharging command to supply the power from the energy storage device to the control cabinet.

4. The control cabinet power supply device of a direct-current coupling off-grid hydrogen production system according to claim 1, wherein
the unidirectional converter is one of a DC/AC converter, a DC/DC converter, an AC/AC converter and an AC/DC converter; and
the bidirectional converter is one of a bidirectional DC/DC converter and a bidirectional DC/AC converter.

5. The control cabinet power supply device of a direct-current coupling off-grid hydrogen production system according to claim 1, wherein
the bidirectional converter has one of an isolated boost topology, a non-isolated boost topology, an isolated buck topology, a non-isolated buck topology, an isolated boost-buck topology, or a non-isolated boost-buck topology.

6. A direct-current coupling off-grid hydrogen production system, comprising a new energy power supply system, a first converter system, a second converter system, a communication unit, a hydrogen storage system, an oxygen storage system and at least one hydrogen production electrolyzer system, wherein
the new energy power supply system is connected with a power supply end of a hydrogen production electrolyzer in the hydrogen production electrolyzer system through the first converter system;
one end of the communication unit is connected with a communication end of a control cabinet, and another end of the communication unit is connected with a communication end of the first converter system and a communication end of the second converter system;
hydrogen and oxygen produced by the hydrogen production electrolyzer are respectively outputted to the hydrogen storage system and the oxygen storage system through respective pipelines; and
the second converter system is the control cabinet power supply device of the direct-current coupling off-grid hydrogen production system according to any one of claims 1 to 5.

7. The direct-current coupling off-grid hydrogen production system according to claim 6, wherein the first converter system comprises at least one converter, wherein
an input end of the converter is connected with at least one power generation branch in the new energy power supply system;
an output end of the converter is configured to supply power to the hydrogen production electrolyzer in the hydrogen production electrolyzer system; and
a normal operation state of the converter is a state in which the converter operates in a maximum power point tracking, MPPT, control mode.

8. The direct-current coupling off-grid hydrogen production system according to claim 7, wherein
the power generation branch comprises:
one photovoltaic string, or
a plurality of photovoltaic strings and a confluence box for receiving power from the plurality of photovoltaic strings; and
the converter is one of a DC/DC converter and a DC/AC converter.

9. The direct-current coupling off-grid hydrogen production system according to claim 7, wherein
the power generation branch comprises a wind turbine and a doubly fed induction generator connected with the wind turbine, or the power generation branch comprises a wind turbine and a permanent magnet synchronous generator connected with the wind turbine; and
the converter is an AC/DC converter or an AC/AC converter.

10. The direct-current coupling off-grid hydrogen production system according to claim 8, wherein
in a case that the first converter system comprises a plurality of converters, output ends of the plurality of converters are connected in series and/or in parallel with each other to supply power to the hydrogen production electrolyzer.

11. The direct-current coupling off-grid hydrogen production system according to any one of claims 6 to 10, wherein
in a case that the number of the hydrogen production electrolyzer system is one, the communication unit is independent of the control cabinet, or the communication unit is integrated into the control cabinet; and
in a case that the number of the hydrogen production electrolyzer system is more than one, the communication unit is independent of the control cabinet.

12. The direct-current coupling off-grid hydrogen production system according to any one of claims 6 to 10, wherein
a distance between the hydrogen production electrolyzer and the first converter system is less than a predetermined distance.

13. A method for controlling a direct-current coupling off-grid hydrogen production system, applied to the direct-current coupling off-grid hydrogen production system according to any one of claims 6 to 12, wherein the method comprises:
controlling, by the second converter system in a case that a starting condition is met, the unidirectional converter in the second converter system to enter a normal operation state, and determining, by the second converter system, whether the remaining power of the energy storage device in the second converter system is less than an upper limit;
controlling, by the second converter system based on a determination that the remaining power of the energy storage device is less than the upper limit, the bidirectional converter in the second converter system, or the unidirectional converter and the bidirectional converter to charge the energy storage device by using the power outputted by the new energy power supply system in the direct-current coupling off-grid hydrogen production system, until the remaining power of the energy storage device is greater than or equal to the upper limit;
transmitting, by the control cabinet of the hydrogen production electrolyzer system in the direct-current coupling off-grid hydrogen production system, a state of the hydrogen production electrolyzer to the first converter system through the communication unit;
determining, by the first converter system, whether the state of the hydrogen production electrolyzer is normal;
the first converter system entering a normal operation state in a case that that the state of the hydrogen production electrolyzer is normal;
determining, by the first converter system, whether the power outputted by the new energy power supply system meets the power demand of the control cabinet;
transmitting, by the first converter system in a case that the power outputted by the new energy power supply system does not meet the power demand of the control cabinet, an energy storage device discharging command to the second converter system through the communication unit; and
controlling, by the second converter system in response to the energy storage device discharging command, the bidirectional converter, or the unidirectional converter and the bidirectional converter to supply the power from the energy storage device to the control cabinet.

14. The method for controlling a direct-current coupling off-grid hydrogen production system according to claim 13, wherein,
in a case that the first converter system comprises a plurality of converters that have built-in controllers and that communicate with each other in a master-slave control manner, operations performed by the first converter system are performed by one of the converters that functions as a master in the first converter system;
in a case that the first converter system comprises a general controller and a plurality of converters, operations performed by the first converter system are performed by the general controller; and
in a case that the first converter system comprises a plurality of converters having built-in controllers and each of the plurality of converters communicates with the communication unit, operations performed by the first converter system are performed by the plurality of converters in the first converter system.

15. The method for controlling a direct-current coupling off-grid hydrogen production system according to claim 13, wherein
in a case that each of the unidirectional converter and the bidirectional converter is provided with a built-in controller and the controller in the unidirectional converter communicates with the controller in the bidirectional converter in a master-slave control manner, operations performed by the second converter system are performed by one of the controller in the unidirectional converter and the controller in the bidirectional converter that functions as a master;
in a case that the unidirectional converter and the bidirectional converter are controlled by a general controller in the second converter system, operations performed by the second converter system are performed by the general controller; and
in a case that each of the unidirectional converter and the bidirectional converter is provided with a built-in controller that communicates with the communication unit, operations performed by the second converter system are performed by the built-in controller in each of the unidirectional converter and the bidirectional converter.
